# EUROPEAN PATENT APPLICATION

(11) **EP 2 009 436 A1**
(43) Date of publication of application: **31.12.2008**
(21) Application number: 07111005.0
(22) Date of filing: 26.06.2007
(51) Int. Cl.: G01N 29/07, G01N 29/22, G01N 29/26

(54) **Method for the non-destructive inspection of rotor blades of a steam turbine and inspection device for being used in said method**

(71) Applicant: Alstom Technology Ltd, 5400 Baden (CH)
(72) Inventor: The designation of the inventor has not yet been filed

(57) **Abstract**

The invention relates to a method for the non-destructive inspection of rotor blades (Bn-1, Bn, Bn+1) of a steam turbine, said rotor blades (Bn-1, Bn, Bn+1) each being mounted on a rotor body by means of a pin root, whereby said pin root is received in a respective circumferential slot of said rotor body, and whereby said pin root is subdivided in radial direction into at least three root sections, the first of which is located outside of said rotor body, and the other ones having pin holes for fastening said pin root at said rotor body, said method comprising the steps of
• providing a PA(Phased Array) probe with an ultrasonic PA(Phased Array) transducer (32) comprising a plurality of PA(Phased Array) elements, and being connected to a transceiver unit;
• placing said PA probe on the surface of said first root section;
• sending an ultrasonic beam in different directions into said pin root, whereby said beam direction is changed by using pre-selected ones of said plurality of PA elements and changing the phase relationship between said pre-selected PA elements;
• receiving with said PA probe, echoes of said sent beams; and
• analyzing said received echoes.

The inspection area within the root is improved by using a two-dimensional PA transducer (32), wherein a plurality of PA elements is arranged in a two-dimensional matrix configuration.

## Description

### TECHNICAL FIELD OF THE INVENTION

The present invention is in the field of steam turbine technology. It relates to a method for the non-destructive testing of rotor blades of a steam turbine according to the preamble of claim 1, and to an inspection device for being used in such method.

### BACKGROUND OF THE INVENTION

In a steam turbine (ST), blades and blade attachments are very highly loaded because of the turning speed (1500 or 3000 rpm depending on the generator technology) and of the centrifugal forces induced. Blade attachments present a large variety of shapes. This shape depends on the technology used to design the ST. Impulse type ST have mostly pin root blades mounted on rotor discs.

The present invention concerns pin root blades, which are, for example, mounted on the 4^{th} and 5^{th} rows on the LP (low pressure) module of 900-1000 MW nuclear units. These nuclear units are impulse type ST including a high pressure (HP) module and 3 low pressure (LP) modules. LP modules are double flow rotors and each one has 12 shrunk discs; 6 for each flow. There are 7 blade stages for a single flow.

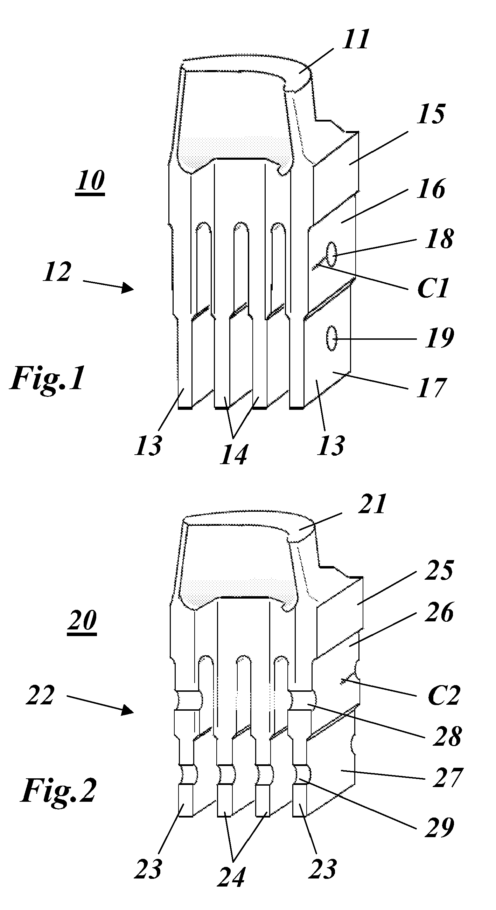

The field of the inspection is especially the blade root for the 4^{th} and 5^{th} rows. On the 1000 MW units mentioned above, the blades are mounted on discs thanks to pins blocking an interdigitated configuration of the blade's root and disc. The blades to be inspected are radial entry pin root blades for the 4^{th} and 5^{th} rows in the LP module, as they are shown in Fig. 1 and Fig. 2. The rotor blades 10, 20 of these Figures have an airfoil 11, 21 and a pin root 12, 22. Both pin roots 12, 22 present 4 fingers 13, 14 and 23, 24, comprising two external fingers 13, 23 and two internal fingers 14, 24. On the one hand, the 4^{th} row blades (type 4-11; Fig. 1) have 2 pin holes 18, 19 crossing all the fingers, i.e. the external fingers 13 and the internal fingers 14; on the other hand, the 5^{th} row blades (type 5-12; Fig. 2) have 2 half holes 28, 29 on the edges of the external fingers 23.

These blades are inspected during each LP module overhaul to detect recurrent cracks C1, C2 around the pin holes 18, 19, 28, 29. On several occasions cracks have been observed visually and/or with Magnetic Particle Inspections (MPI). Under abnormal conditions (such as overspeed, degraded steam quality, intrusion of a foreign body, etc.) unusual events lead to damages in the steam path. Hence there is possible crack initiation in the most stressed areas including blade roots. This is the reason why it is necessary to develop a reliable method to detect cracks in this region in order to prevent accidents and to increase safety and lifetime of the machine. In this way, Non-Destructive Evaluation (NDE) becomes a key to achieve lifetime management.

The main requirement for this inspection is to perform a more reliable test than the current testing method. Presently, these blades roots are inspected with conventional ultrasonic technique (UT). It is based on the use of small ultrasonic (US) transducers with piezoelectric crystals. It requires 4 single element transducers with frequencies of 5 or 10 MHz and with different wedges. The main drawback of this technique is that it requires skewing manually the sensors to detect cracks. This process is not easily repeatable.

Reference WO-A1-2006/079443 discloses a method and device for determining defects on a component of a turbine, especially the pin root of a steam turbine rotor blade, comprising the following steps:
- at least one ultrasonic signal is emitted and captured by means of a group beam examination head on a flat region of the component which is to be examined;
- the group of the beam examination heads are distributed into several virtual examination heads; and
- at least one ultrasonic signal is emitted and captured by at least two of the virtual examination heads which is directed to an individual flat region which is to be examined.

Although this group beam examination head is advantageously kept in a fixed position on the blade root and the beam direction is simply changed by activating different sub-groups of the group beam examination head and changing their phase-relationship, this prior-art method has the disadvantage, that only the upper part of the blade can be inspected. Furthermore, the group beam examination head comprises a single-line array of 64 transceiving elements, which require a specialized transceiving unit and analyzing software.

For the new method, the target is to reach the following objectives:
- extend the area covered with the former inspection method
- detect flaws of 1 x1 mm with various orientations
- use only a single wedge for the whole inspection
- access to the second pin hole (the lower one)
- use of already available transceiver unit technology.

### SUMMARY OF THE INVENTION

It is an object of the invention to have a method and device for non-destructively inspecting the pin roots of rotor blades mounted on a rotor, which enable the detection of cracks in the main areas of the blade root, especially around the pin holes, which are provided in said blade roots for mounting said blades to said rotor.

According to the invention the method comprises the steps of:
- providing a PA(Phased Array) probe with an ultrasonic PA(Phased Array) transducer comprising a plurality of PA(Phased Array) elements, and being connected to a transceiver unit;
- placing said PA probe on the surface of said first root section;
- sending an ultrasonic beam in different directions into said pin root, whereby said beam direction is changed by using pre-selected ones of said plurality of PA elements and changing the phase relationship between said pre-selected PA elements;
- receiving with said PA probe, echoes of said sent beams;
- analyzing said received echoes; and
- using a two-dimensional PA transducer, wherein a plurality of PA elements is arranged in a two-dimensional matrix configuration.

According to a preferred embodiment of the invention said PA transducer has the form of an elongated rectangle, and the PA probe is arranged on said surface of said first root section, such that the longitudinal direction of said PA transducer is perpendicular of the radial direction of the rotor blade.

According to another embodiment of the invention the width of the PA transducer in the longitudinal direction is smaller than the width of the pin root, and the ultrasonic beams, and the position of the PA probe is changed from a first position to a second position during the inspection process, whereby, in the first position, one longitudinal end of the PA transducer is in alignment with one radial edge of the pin root, while, in the second position, the other longitudinal end of the PA transducer is in alignment with the other radial edge of the pin root.

According to another embodiment of the inventive method the PA elements of the PA transducer lie in a common plane, and the PA probe is arranged on said surface of said first root section, such that the common plane of PA transducer has an oblique orientation with regard to the surface of said first root section.

Another embodiment of the invention is characterized in that a wedge is provided between said PA probe and said surface of said first root section in order to get said oblique orientation of said PA transducer.

According to another embodiment of the invention a wedge with a wedge angle of approximately 32° is used.

According to another embodiment of the invention, in order to cover with the inspection the whole area around the pin holes in the second and third root sections, in each of said two positions of said PA probe the ultrasonic beam is transmitted in at least three different directions.

According to another embodiment of the invention there is a pin hole provided in each of that second and third root sections, and the at least three different directions are chosen, such that the side areas and front and back areas of the pin hole in the second root section, and the side areas of the pin hole in the third root section can be inspected.

According to another embodiment of the invention a PA transducer with 4 x 32 PA elements, arranged in four parallel rows with 32 PA elements each is used.

According to another embodiment of the invention the PA transducer is operated with a frequency of about 5 MHz.

The inspection device for the non-destructive inspection of rotor blades of a steam turbine according to the invention comprises a PA(Phased Array) probe with a PA(Phased Array) transducer, said PA transducer being connected to a transceiver unit, and comprising a plurality of PA(Phased Array) elements, whereby said PA transducer is a two-dimensional PA transducer, wherein a plurality of PA elements is arranged in a two-dimensional matrix configuration.

According to an embodiment of the invention the operating frequency of the PA transducer and transceiver unit is approximately 5 MHz.

According to another embodiment of the invention the PA elements of the PA transducer lie in a common plane, and a wedge is provided at the transmitting and receiving and of said PA probe, such that the common plane of PA transducer has an oblique orientation with regard to the surface to be placed on.

According to another embodiment of the invention said PA transducer has the form of an elongated rectangle extending in a longitudinal direction, and that the wedge extends with its edge along said longitudinal direction.

According to another embodiment of the invention the wedge has a wedge angle of approximately 32°.

According to another embodiment of the invention the PA transducer has 4 x 32 PA elements, arranged in four parallel rows with 32 PA elements each.

According to another embodiment of the invention the wedge has an adapter portion for aligning the PA probe with respect to the pin root of a rotor blade, such that the position of the PA probe can be changed between a fixed first position and a fixed second position during the inspection process, whereby, in the first position, one longitudinal end of the PA transducer is in alignment with one radial edge of the pin root, while, in the second position, the other longitudinal end of the PA transducer is in alignment with the other radial edge of the pin root.

### BRIEF DESCRIPTION OF THE DRAWING

The invention is now explained in various embodiments with respect to the drawings.
- Fig. 1: shows a first steam turbine rotor blade with a pin root to be inspected with the method according to the invention;
- Fig. 2: shows a second steam turbine rotor blade with a pin root to be inspected with the method according to the invention;
- Fig. 3: shows the external finger of the blade pin root according to Fig. 1 in a top view (Fig. 1a) and lateral view (Fig. 1b) with the inspection areas shaded;
- Fig. 4: shows the external finger of the blade pin root according to Fig. 2 in a top view (Fig. 2a) and lateral view (Fig. 2b), with the inspection areas shaded;
- Fig. 5: shows the matrix configuration of the PA transducer being used in a preferred embodiment of the invention;
- Fig. 6: shows a preferred embodiment of the inspection configuration according to the invention;
- Fig. 7: shows one of the two inspecting positions of the PA transducer and wedge on one of the blades; and
- Fig. 8-13: show three different beam directions for each of the two PA transducer positions on a blade root to be inspected.

### DETAILED DESCRIPTION

As shown in Fig. 1-4 the rotor blades 10, 20 to be inspected comprise and airfoil 11, 21 and a pin root 12, 22 in the form of four radially extending external and internal fingers 13, 14 and 23, 24 (radial direction 31). The external fingers 13, 23, which can be inspected by non-destructive methods, are subdivided in three root section 15, 16, 17 and 25, 26, 27. When the blades 10, 20 are mounted on the rotor 30, only the first (shaded) root section 15, 25 is accessible from outside. An ultrasonic transducer can be placed on the surface of the first root section 15, 25 to inspect the pin holes 18, 19 and 28, 29 located in the other root sections 16, 17 and 26, 27, by transmitting ultrasonic waves into these sections and receiving and analyzing the respective echoes. With this method, cracks C1, C2 at the pin holes 18, 19 und 28, 29 can be detected.

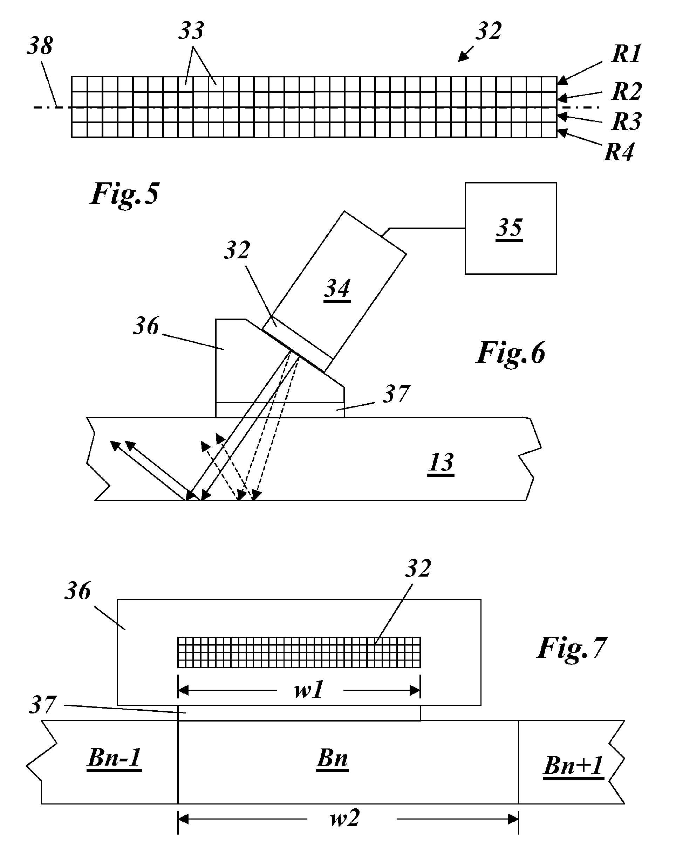

According to the invention a Phased Array ultrasonic transducer (PA transducer; 32 in Fig. 5-13) is used for inspection of the blade roots 12, 22. A PA transducer can be approximated by a single probe tiled in many PA elements (33 in Fig. 5). Each element is controlled independently of each other and doesn't influence the others. If every element of the probe is able to transmit and receive independently, it is possible to build complex wave front using Huygens principle. In practice, it allows to modify electronically the acoustic probe characteristics. This is obtained by introducing time shifts in the electrical signal sent to each piezoelectric element (delay or focal laws). As each element is controlled individually, an N-element PA probe is conceptually equivalent to N conventional UT probes, but with more abilities. In using delay laws (time delay on each element) one can obtain a focal point at a given depth.

PA transducers provide several advantages such as:
- Dynamic depth focusing
- Beam steering
- Electronical scanning

Of course, it's also possible to mix these possibilities to offer a larger variety of processes. Adding a displacement to the probe also increases the number of possibilities.

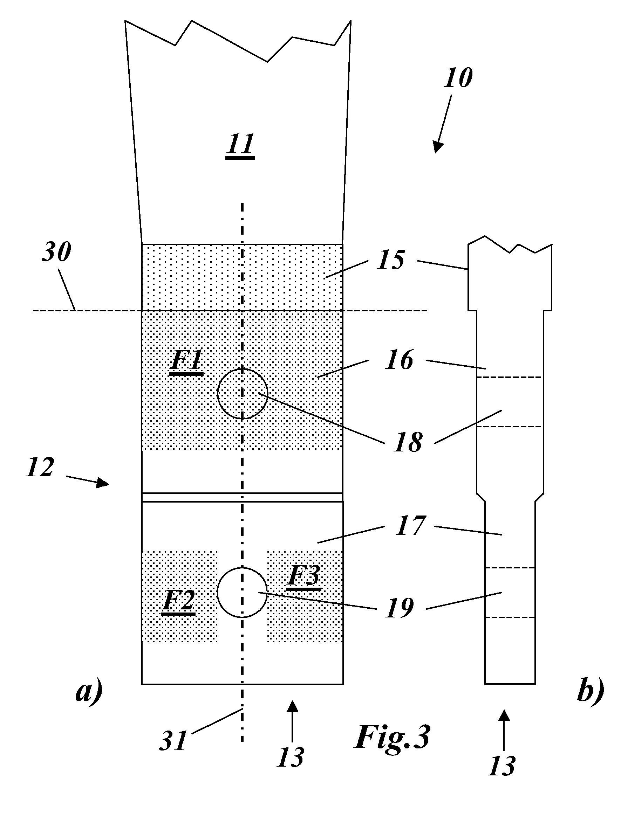

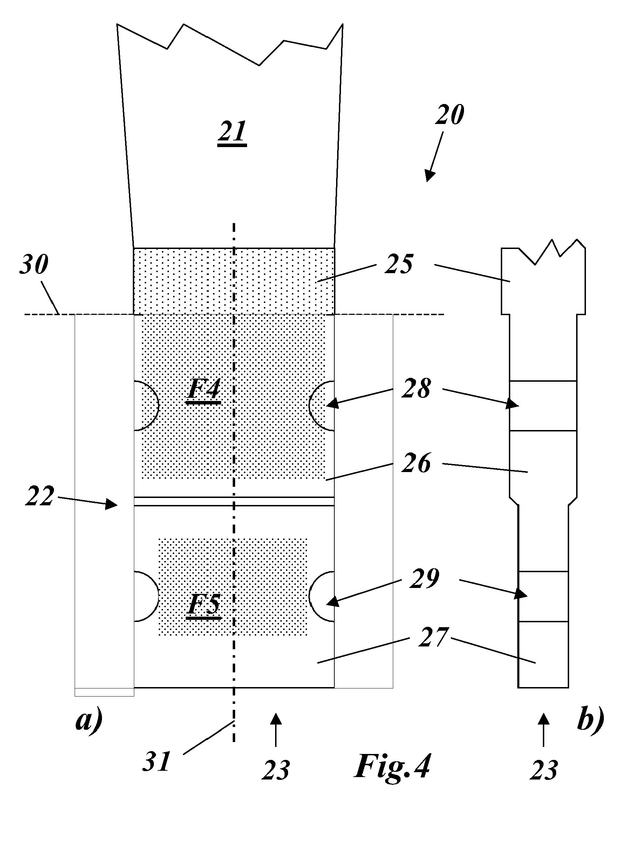

Depending on the cutting of the elements, there are several categories of PA probes: Linear probes (1 D), matrix probes (2D), annular probes, etc.. Each of these categories has different applications. In order to access the inspection areas F1,..,F3 in Fig. 3 and F4, F5 in Fig. 4 there is a need to steer the ultrasonic beam in two directions (vertically and horizontally), which can be done by using a matrix probe (PA transducer 32 in Fig. 5).

In the present case, the ultrasounds only propagate within the blade body. The material used to manufacture these blades is not too dispersive for ultrasonics, thus it's possible to use a frequency of 5 MHz for the probe.

The width of the blade (w2 in Fig. 7) is about a few centimetres and the access area root section 15 in Fig. 3 and root section 25 in Fig. 4) is two centimetres wide in the other (radial) direction 31. The number of elements and the total aperture has to take this size into account. A first idea is to use a transducer as large as the blade and a few elements in the radial direction. However, the size of elements and the gap between them have an incidence on the maximum steering angle that the probe will be able to provide.

The geometry of the blades 10, 20 require a refracted angle in the primary axis of around 50° in the blade. As the aperture is small due to the size of the access area (15, 25), the ideal probe would have 4x64 elements, i.e. 4 elements in the radial direction and 64 in the circumferential direction.

However, such a probe was not adopted for two reasons: First, the number of elements in this probe is very high and it is difficult to define delay laws compatible with existing hardware equipment which is only able to use 32/128 elements. On the other hand, the price of such a probe would be very expensive.

Therefore, a probe is used with 128 elements in a 2D matrix (4x32) with 4 elements in the primary axis and 32 elements in the secondary axis. The total aperture of the probe is 6x24 mm. The size of one PA element 33 is smaller than one square millimetre.

The characteristics of the two-dimensional 4x32 (2D) array used for the inspection of the pin roots are summed up in the following table:

| Manufacturer | Imasonic |
|---|---|
| Frequency | 5 MHz |
| Total Aperture | 6 x 24 mm |
| # elements primary axis | 4 |
| # elements secondary axis | 32 |
| Element size primary axis | 1.35 mm |
| Element size secondary axis | 0.6 mm |

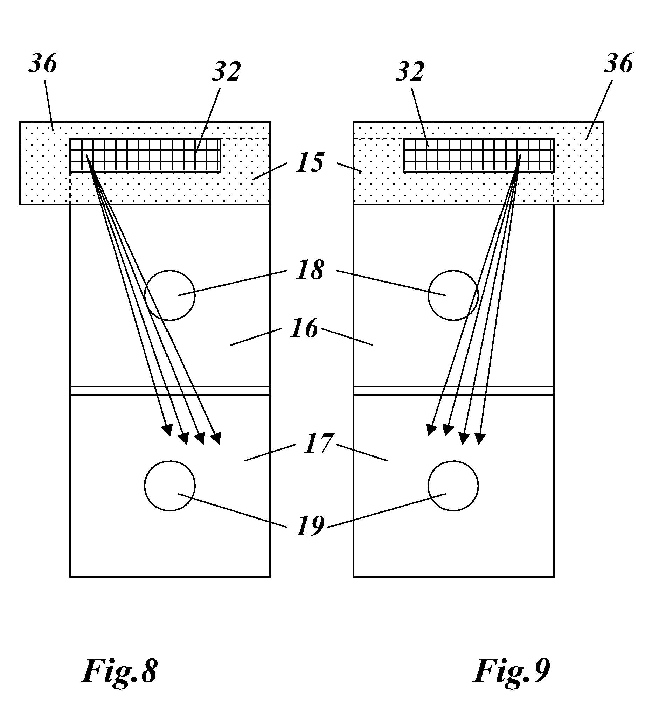

With only 4 elements in the primary axis, it is difficult to reach the needed refraction angle in the blade. As shown in Fig. 6, it is necessary to mount the PA probe 34 with its PA transducer 32 on a specific wedge 36. The PA probe 34 is connected to a transceiver unit 35, which may be a ZETEC Omniscan 32/128 PR Transmitter/Receiver. The PA probe 34 and wedge 36 is placed on an external finger 13 to transmit ultrasonic waves with different angles into the blade root (Fig. 6). As will be explained in connection with Figs. 8-13 below, the PA probe must be placed on each blade Bn-1, Bn, Bn+1 in two fixed positions (one position is shown in Figs. 8, 10, 12, the other position is shown in Figs. 9, 11, 13). Hence, the wedge 36 is designed to be easy to position. At the base plane of the wedge 36, an adapter portion 37 is provided (Fig. 7), which has the same width w1 as the aperture width of the PA transducer 32 itself. The overall width of the wedge 36 is bigger than w1.

The method according to the invention is designed to use two positions on the blade (see above). Each position places the longitudinal edge of the PA transducer 32 (edge in longitudinal direction 38 in Fig. 5) on the edge of the blade root 12, 22, on either side. Thanks to these two different positions it is possible to generate elastic waves aiming the other side of the blade with an acceptable angle.

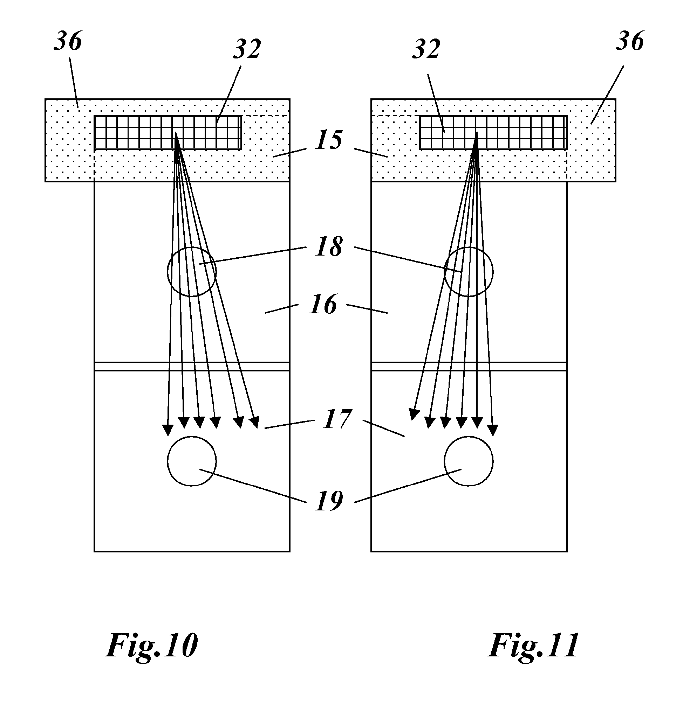

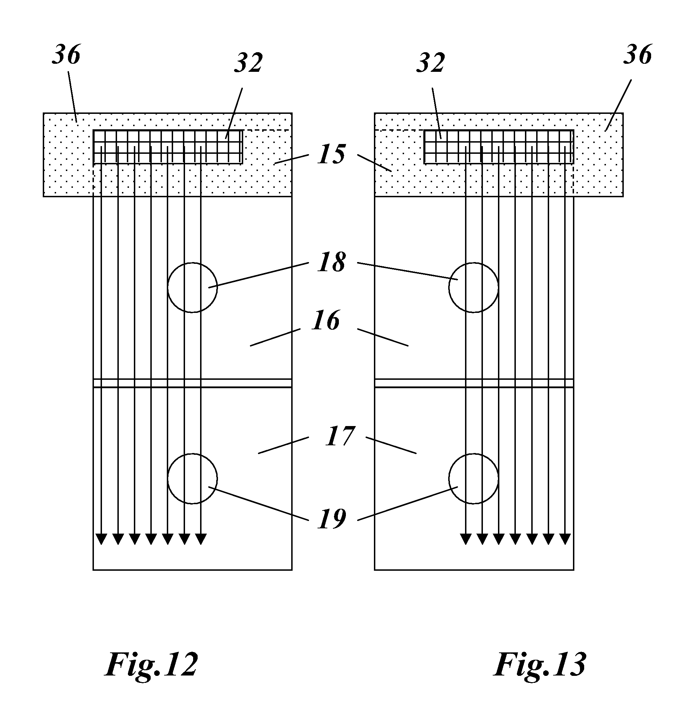

In order to cover the whole area of the upper hole 18, 28 (both sides, front and back; inspection area F1 in Fig. 3; inspection area F4 in Fig. 4) and the lower hole 19, 29 (inspection areas F2 und F3 in Fig. 3; inspection area F5 in Fig. 4), it is necessary to use 3 channels with different beam directions at the same time: both sides (Fig. 8, 9) and front and back (Fig. 10, 11) for the upper hole 18 and the sides of the lower hole 19 (Fig. 12, 13).

With such a method, it is possible to detect flaws with the following characteristics:

| | |
|---|---|
| Probe | 5 MHz, 4x32 elements |
| Minimum size of defaults (mm) | 1x1 |
| Number of insertions/rotor | 2 (one for each side of the row) |
| Orientation/tilt (degrees) | ±40°/±30° for the upper hole 0°/0° for the other hole |
| Covered area | Both holes. |

The technique according to the invention uses up-to-date technologies and brings many advantages such as the possibility to save fingerprints of the inspection of each blade in order to follow the evolution of the situation. Moreover it's easier to interpret/compare images than a-scans made with single-element probes. Such a technique allows detecting cracks in the blade roots as early as possible in order to repair or to change the damaged parts. This leads to a better life cycle of the power-gen unit and increases its lifetime.

### LIST OF REFERENCE NUMERALS

- 10,20: rotor blade
- 11,21: airfoil
- 12,22: pin root
- 13,23: external finger
- 14,24: internal finger
- 15,16,17: root section
- 18,19: pin hole
- 25,26,27: root section
- 28,29: pin hole (half hole)
- 30: rotor
- 31: radial direction
- 32: PA transducer
- 33: PA element
- 34: PA probe
- 35: transceiver unit
- 36: wedge (T form)
- 37: adapter portion
- 38: longitudinal direction
- Bn-1,Bn,Bn+1: blade
- F1,..,F5: inspection area
- R1,..,R4: row
- w1: width (PA transducer)
- w2: width (pin root)

## Claims

1. Method for the non-destructive inspection of rotor blades (10, 20) of a steam turbine, said rotor blades (10, 20) each being mounted on a rotor body (30) by means of a pin root (12, 22), whereby said pin root (12, 22) is received in a respective circumferential slot of said rotor body (30), and whereby said pin root (12, 22) is subdivided in radial direction (31) into at least three root sections (15, 16, 17; 25, 26, 27), the first of which is located outside of said rotor body (31), and the other ones having pin holes (18, 19; 28, 29) for fastening said pin root (12, 22) at said rotor body (31), said method comprising the steps of
• providing a PA(Phased Array) probe (34) with an ultrasonic PA(Phased Array) transducer (32) comprising a plurality of PA(Phased Array) elements (33), and being connected to a transceiver unit (35);
• placing said PA probe (34) on the surface of said first root section (15, 25);
• sending an ultrasonic beam in different directions into said pin root (12, 22), whereby said beam direction is changed by using pre-selected ones of said plurality of PA elements (33) and changing the phase relationship between said pre-selected PA elements (33);
• receiving with said PA probe (34), echoes of said sent beams; and
• analyzing said received echoes;
**characterized in that** a two-dimensional PA transducer (32) is used, wherein a plurality of PA elements (33) is arranged in a two-dimensional matrix configuration.

2. Method according to claim 1, **characterized in that** said PA transducer (32) has the form of an elongated rectangle, and the PA probe (34) is arranged on said surface of said first root section (15, 25), such that the longitudinal direction (38) of said PA transducer (32) is perpendicular of the radial direction (31) of the rotor blade (10, 20).

3. Method according to claim 2, **characterized in that** the width (w1) of the PA transducer (32) in the longitudinal direction (38) is smaller than the width (w2) of the pin root (12, 22), and the ultrasonic beams, and the position of the PA probe (34) is changed from a first position to a second position during the inspection process, whereby, in the first position, one longitudinal end of the PA transducer (32) is in alignment with one radial edge of the pin root (12, 22), while, in the second position, the other longitudinal end of the PA transducer (32) is in alignment with the other radial edge of the pin root (12, 22).

4. Method according to claim 2 or 3, **characterized in that** the PA elements (33) of the PA transducer (32) lie in a common plane, and the PA probe (34) is arranged on said surface of said first root section (15, 25), such that the common plane of PA transducer (32) has an oblique orientation with regard to the surface of said first root section (15, 25).

5. Method according to claim 4, **characterized in that** a wedge (36) is provided between said PA probe (34) and said surface of said first root section (15, 25) in order to get said oblique orientation of said PA transducer (32).

6. Method according to claim 5, **characterized in that** a wedge (36) with a wedge angle of approximately 32° is used.

7. Method according to claim 3, **characterized in that**, in order to cover with the inspection the whole area around the pin holes (18, 19; 28, 29) in the second and third root sections (16, 17; 26, 27), in each of said two positions of said PA probe (34) the ultrasonic beam is transmitted in at least three different directions.

8. Method according to claim 7, **characterized in that** there is a pin hole (18, 19) provided in each of that second and third root sections (16, 17), and the at least three different directions are chosen, such that the side areas and front and back areas of the pin hole (18) in the second root section 16, and the side areas of the pin hole (19) in the third root section can be inspected.

9. Method according to one of the claims 1 to 8, **characterized in that** a PA transducer (32) with 4 x 32 PA elements (33), arranged in four parallel rows (R1,..,R4) with 32 PA elements (33) each, is used.

10. Method according to one of the claims 1 to 9, **characterized in that** the PA transducer (32) is operated with a frequency of about 5 MHz.

11. Inspection device for the non-destructive inspection of rotor blades (10, 20) of a steam turbine according to one of the claims 1 to 10, comprising a PA(Phased Array) probe (34) with a PA(Phased Array) transducer (32), said PA transducer (32) being connected to a transceiver unit (35), and comprising a plurality of PA(Phased Array) elements (33), **characterized in that** said PA transducer is a two-dimensional PA transducer, wherein a plurality of PA elements (33) is arranged in a two-dimensional matrix configuration.

12. Device according to claim 11, **characterized in that** the operating frequency of the PA transducer (32) and transceiver unit (35) is approximately 5 MHz.

13. Device according to claim 11 or 12, **characterized in that** the PA elements (33) of the PA transducer (32) lie in a common plane, and that a wedge (36) is provided at the transmitting and receiving and of said PA probe (34), such that the common plane of PA transducer (32) has an oblique orientation with regard to the surface to be placed on.

14. Device according to claim 13, **characterized in that** said PA transducer (32) has the form of an elongated rectangle extending in a longitudinal direction (38), and that the wedge (36) extends with its edge along said longitudinal direction (38).

15. Device according to claim 13 or 14, **characterized in that** the wedge (36) has a wedge angle of approximately 32°.

16. Device according to one of the claims 11 to 15, **characterized in that** the PA transducer has 4 x 32 PA elements (33), arranged in four parallel rows (R1,..,R4) with 32 PA elements (33) each.

17. Device according to claim 16, **characterized in that** the wedge (36) has an adapter portion (37) for aligning the PA probe (34) with respect to the pin root (12, 22) of a rotor blade (10, 20), such that the position of the PA probe (34) can be changed between a fixed first position and a fixed second position during the inspection process, whereby, in the first position, one longitudinal end of the PA transducer (32) is in alignment with one radial edge of the pin root (12, 22), while, in the second position, the other longitudinal end of the PA transducer (32) is in alignment with the other radial edge of the pin root (12, 22).
